# EUROPÄISCHE PATENTANMELDUNG

(11) **EP 1 148 353 A2**
(43) Veröffentlichungstag der Anmeldung: **24.10.2001**
(21) Anmeldenummer: 01109637.7
(22) Anmeldetag: 19.04.2001
(51) Int. Cl.: G01V 8/20

(54) **Optischer Sensor**

(30) Priorität: 22.04.2000 DE 10020114
(71) Anmelder: Leuze electronic GmbH + Co., 73277 Owen/Teck (DE)
(72) Erfinder: Quapil, Gerald, Dr., 73277 Owen/Teck (DE); Schönhaar, Jürgen, 72669 Unterensingen (DE); Banschbach, Rolf, 72584 Hülben (DE)
(74) Vertreter: Ruckh, Rainer Gerhard, Dr.

(57) **Zusammenfassung**

Die Erfindung betrifft einen optischen Sensor (1) mit wenigstens einem Sender (3) und einem in Abstand zu diesem angeordneten Empfänger (4). Die vom Sender (3) emittierten Sendelichtstrahlen (2) sind bei freiem Strahlengang auf den Empfänger (4) geführt und werden bei einem Objekteingriff zumindest teilweise abgeschwächt. Der Empfänger (4) ist von einem eine vorgegebene Anzahl von Empfangselementen (14) aufweisenden Zeilenelement gebildet. Weiterhin sind Mittel zur Erkennung von Strukturen von im Strahlengang der Sendelichtstrahlen (2) angeordneten Objekten (5) vorgesehen.

## Beschreibung

Die Erfindung betrifft einen optischen Sensor gemäß dem Oberbegriff des Anspruchs 1.

Derartige Sensoren können insbesondere als Lichtschranken ausgebildet sein. Der Sender und der Empfänger der Lichtschranke sind in getrennten Gehäusen in Abstand zueinander angeordnet, so dass bei freiem Strahlengang die vom Sender emittierten Sendelichtstrahlen auf den Empfänger treffen. Tritt ein Objekt in den Strahlengang der Lichtschranke, so treffen die Sendelichtstrahlen nicht mehr oder nur noch teilweise auf den Empfänger. Durch die Bewertung der Amplituden der Empfangssignale am Ausgang des Empfängers wird ein binäres Schaltsignal abgeleitet, welches angibt, ob sich ein Objekt im Strahlengang der Lichtschranke befindet oder nicht.

Weiterhin können derartige Sensoren auch als Gabellichtschranken ausgebildet sein, wobei in diesem Fall der Sensor in einem gabelförmigen Gehäuse integriert ist. Das Gehäuse weist zwei gabelförmige Gehäuseelemente auf, die beidseits des zu überwachenden Bereichs in Abstand zueinander liegen. Dabei werden bei freiem Strahlengang die Sendelichtstrahlen, die von dem in einem ersten Gehäuseelement integrierten Sender emittiert werden, auf den Empfänger geführt, der im zweiten Gehäuseelement angeordnet ist.

Durch Verwendung geeigneter Sende- und Empfangsoptiken, welche dem Sender beziehungsweise dem Empfänger zugeordnet sind, wird ein kollimierter Strahlverlauf der Sendelichtstrahlen im zu überwachenden Bereich erhalten, wobei die Sendelichtstrahlen mittels der Empfangsoptik auf den Empfänger abgebildet werden. Bei Eintritt eines Objektes in den Strahlengang der Sendelichtstrahlen werden zumindest Teile des Empfängers abgeschaltet. Dies führt zu einer entsprechenden Objektmeldung im optischen Sensor.

Derartige Gabellichtschranken werden insbesondere zur Doppelbogenkontrolle in bogenverarbeitenden Maschinen eingesetzt. Mittels der Gabellichtschranke erfolgt dabei in einer Durchlichtmessung eine Unterscheidung, ob ein einfacher Bogen oder ein Doppelbogen in der bogenverarbeitenden Maschine gefördert wird. Hierzu wird das Empfangssignal des Empfängers der Gabellichtschranke mit einem Schwellwert bewertet. Je nach dem, ob das Empfangssignal oberhalb oder unterhalb des Schwellwerts liegt, gilt ein Einfachbogen beziehungsweise ein Doppelbogen als erkannt.

Eine derartige Doppelbogenkontrolle arbeitet zuverlässig bei der Erfassung einfarbiger Bögen. Jedoch treten dann Nachweisprobleme auf, wenn die Bögen Bedruckungen aufweisen. Die Lichtdurchlässigkeit der Bögen variiert stark mit der unterschiedlichen Bedruckung, so dass eine sichere Unterscheidung von Einfach- und Doppelbögen nicht mehr gewährleistet ist.

Der Erfindung liegt die Aufgabe zugrunde einen Sensor der eingangs genannten Art so auszubilden, dass Objekte mit einer möglichst großen Nachweisempfindlichkeit erfassbar sind.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor weist wenigstens einen Sender und einen in Abstand zu diesem angeordneten Empfänger auf. Die vom Sender emittierten Sendelichtstrahlen sind bei freiem Strahlengang auf den Empfänger geführt und werden bei einem Objekteingriff zumindest teilweise abgeschwächt.

Der Empfänger ist von einem eine vorgegebene Anzahl von Empfangselementen aufweisenden Zeilenelement gebildet. Weiterhin sind Mittel zur Erkennung von Strukturen von im Strahlengang der Sendelichtstrahlen angeordneten Objekten vorgesehen.

Ein wesentlicher Vorteil des erfindungsgemäßen Sensors besteht darin, dass durch die Verwendung eines Zeilenelements als Empfänger bei der Objektdetektion eine hohe Ortsauflösung in Längsrichtung des Zeilenelements erhalten wird, wobei die Ortsauflösung im Wesentlichen durch die Zahl der Empfangselemente vorgegeben ist.

Besonders vorteilhaft werden als Empfänger CCD-Zeilenelemente oder CMOS-Zeilenelemente eingesetzt. Diese Zeilenelemente weisen eine große Anzahl identischer Empfangselemente auf. Die fotoempfindlichen Flächen der Empfangselemente weisen typischerweise eine rechteckige Form mit Kantenlängen im Bereich einiger µm auf.

Erfindungsgemäß weist der Sensor Mittel zur Erkennung von Strukturen von im Strahlengang der Sendelichtstrahlen angeordneten Objekten auf. Vorzugsweise sind diese Mittel von einer Auswerteeinheit gebildet, in welcher eine ortsaufgelöste Grauwertanalyse der an den Ausgängen der Empfangselemente des Empfängers anstehenden Empfangssignale durchgeführt wird.

Dadurch wird erreicht, dass mit dem Sensor unterschiedliche Objektstrukturen, insbesondere Strukturen mehrlagiger Objekte mit einer großen Nachweissicherheit erfassbar sind. Dabei kann mit dem erfindungsgemäßen Sensor insbesondere die Anzahl mehrerer übereinander liegender Objekte, sowie deren Orientierung und Konturverlauf erfasst werden. Weiterhin können die Objekte auf Strukturdefekte und dergleichen untersucht werden.

In einer vorteilhaften Ausführungsform der Erfindung werden die vom Sender emittierten Sendelichtstrahlen auf den Empfänger fokussiert, so dass diese die Empfangselemente bei freiem Strahlengang vollständig ausleuchten.

Die Strahlbreite der Sendelichtstrahlen quer zur Längsachse des Zeilenelements nimmt somit vom Sender zum Empfänger hin kontinuierlich ab, wobei die Strahlbreite der Sendelichtstrahlen an der Oberfläche des Empfängers im Wesentlichen der Breite des Zeilenelements entspricht.

Diese Strahlführung führt zu einer besonders großen Nachweisempfindlichkeit des Sensors. Dies beruht zum einen darauf, dass die Sendelichtstrahlen vollständig auf den Empfänger abgebildet werden. Zudem kann zur Bestimmung von Strukturen von Objekten das jeweilige Objekt in einer Distanz zum Empfänger platziert werden, in welcher die gesamte Struktur eines Objektes, welches mit dem Sensor zu erfassen ist, von den Sendelichtstrahlen ausgeleuchtet wird.

Durch die so gewählte Anordnung der Objekte im Strahlengang der Sendelichtstrahlen wird eine optimierte Abschattung der Sendelichtstrahlen bei einem Objekteingriff und damit eine maximierte Signaländerung der Empfangssignale am Ausgang des Empfängers erhalten.

Der erfindungsgemäße Sensor ist besonders vorteilhaft zur Detektion von Strukturen mehrlagiger Objekte einsetzbar. Ein Anwendungsbeispiel hierfür ist die Unterscheidung von Einfach- und Mehrfachbögen an bogenverarbeitenden Maschinen. Ein wesentlicher Vorteil des erfindungsgemäßen Sensors besteht darin, dass eine sichere Unterscheidung der Einfach- und Mehrfachbögen auch dann gewährleistet ist, wenn die Bögen bedruckt sind und damit eine über die Bogenoberfläche inhomogene Transparenz für die Sendelichtstrahlen aufweisen.

Weiterhin sind mit dem erfindungsgemäßen Sensor auf Trägermaterialien aufgebrachte Etiketten erfassbar, welche typischerweise zumindest teilweise transparent sind. Auch nicht transparente mehrlagige Objekte wie zum Beispiel Damenbinden, welche aus Einlagen, die auf einem Trägermaterial aufgebracht sind, können mit dem Sensor erfasst werden. Dabei wird mit dem Sensor insbesondere die räumliche Orientierung und der Konturverlauf der auf den Trägermaterialien aufgebrachten Etiketten beziehungsweise Einlagen erfasst.

Schließlich kann der Sensor zur Füllstandskontrolle in Behältern, insbesondere Flaschen eingesetzt werden.

Die Erfindung wird im nachstehenden anhand der Zeichnungen erläutert. Es zeigen:
- Figur 1:: Längsschnitt durch ein erstes Ausrührungsbeispiel des erfindungsgemäßen optischen Sensors.
- Figur 2:: Querschnitt durch einen Ausschnitt des Sensors gemäß Figur 1.
- Figur 3:: Schematische Darstellung einer Anordnung mit dem Sensor gemäß Figuren 1 und 2 zur Füllstandskontrolle an Flaschen
a) Draufsicht auf die Anordnung.
b) Querschnitt durch die Anordnung.
- Figur 4:: Schematische Darstellung eines Sensors gemäß Figuren 1 und 2 zur Erfassung von Einfach- und Mehrfachbögen an einer bogenverarbeitenden Maschine.
- Figur 5:: Grauwertverteilungen der Empfangssignale des Empfängers des Sensors gemäß Figur 4 bei der Detektion eines Einfach-, Doppel- und Dreifachbogens.
- Figur 6:: Schematische Darstellung eines Sensors gemäß Figuren 1 und 2 zur Detektion von auf einem Trägermaterial aufgebrachten Etiketten
a) Draufsicht auf die Anordnung.
b) Querschnitt durch die Anordnung.
- Figur 7:: Schematische Darstellung eines Sensors gemäß Figuren 1 und 2 zur Detektion von Damenbinden.
- Figur 8:: Ortsabhängiger Verlauf der Empfangssignale des Empfängers für die Anordnung gemäß Figur 7.

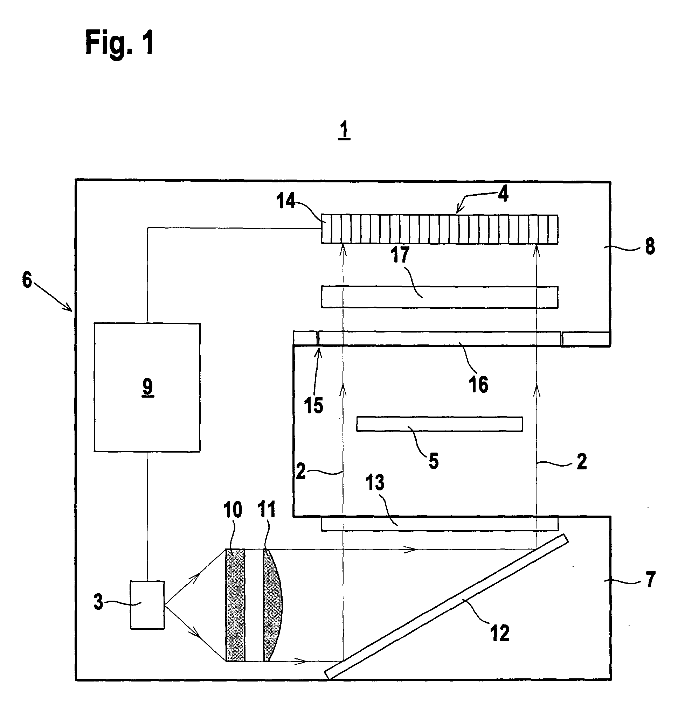

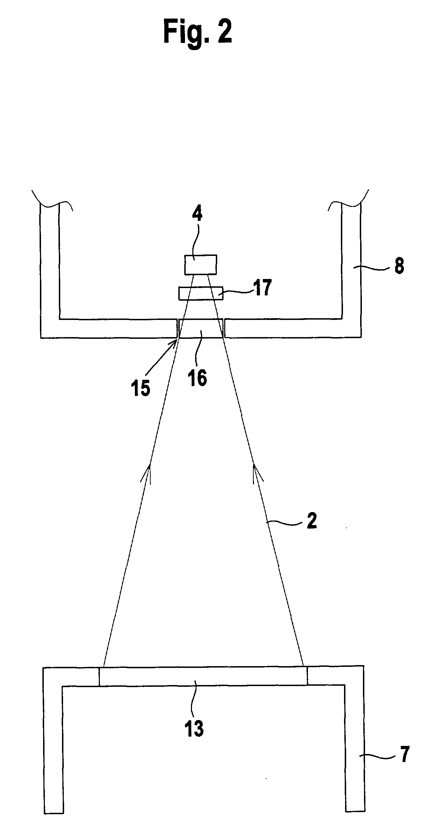

Die Figuren 1 und 2 zeigen ein erstes Ausführungsbeispiel des erfindungsgemäßen optischen Sensors 1. Der Sensor 1 weist einen Sendelichtstrahlen 2 emittierenden Sender 3 sowie einen in Abstand zum Sender 3 angeordneten Empfänger 4 auf.

Zwischen dem Sender 3 und dem Empfänger 4 liegt ein Überwachungsbereich, innerhalb dessen Objekte 5 mit dem Sensor 1 erfasst werden. Die Sendelichtstrahlen 2 sind entlang des Überwachungsbereichs geführt und treffen bei freiem Strahlengang ungehindert auf den Empfänger 4. Bei Eintritt eines Objektes 5 in den Überwachungsbereich trifft zumindest ein Teil der Sendelichtstrahlen 2 auf das Objekt 5. Je nach dem ob ein Objekt 5 transparent oder lichtundurchlässig ist, werden die Sendelichtstrahlen 2 bei Durchgang des Objekts 5 geschwächt oder an diesem reflektiert, so dass höchstens ein Teil der Lichtmenge dieser Sendelichtstrahlen 2 auf das Objekt 5 trifft.

Der Sensor 1 ist im vorliegenden Ausführungsbeispiel von einer Gabellichtschranke gebildet. Dementsprechend weist der Sensor 1 ein gabelförmiges Gehäuse 6 auf. Das Gehäuse 6 weist einen Grundkörper und zwei von diesem hervorstehende parallel zueinander verlaufende Gehäuseelemente 7, 8 auf.

Das erste Gehäuseelement 7 dient zur Aufnahme des Senders 3 und der diesem nachgeordneten optischen Einheiten. Das zweite Gehäuseelement 8 dient zur Aufnahme des Empfängers 4 und der diesem vorgeordneten optischen Einheiten.

In dem Grundkörper befinden sich die elektronischen Komponenten der Gabellichtschranke. Hierzu gehört insbesondere eine Auswerteeinheit 9, die von einem Mikrocontroller oder dergleichen gebildet ist. Die Auswerteeinheit 9 dient zur Auswertung der am Ausgang des Empfängers 4 anstehenden Empfangssignale. Zudem bildet die Auswerteeinheit 9 eine Steuereinheit zur Ansteuerung des Senders 3.

Der Sender 3 ist von einer Leuchtdiode oder einer Laserdiode gebildet. Besonders vorteilhaft besteht der Sender 3 aus einer Punktlichtdiode. Die Sendelichtstrahlen 2 einer Punktlichtdiode können besonders gut kollimiert werden, wodurch ein großer Messbereich erhalten wird. Zudem treten bei von einer Punktlichtquelle emittierten Sendelichtstrahlen 2 im Gegensatz zu Laserlicht geringe Interferenzeffekte auf. Die vom Sender 3 emittierten Sendelichtstrahlen 2 werden zunächst über eine Sendeoptik geführt. Die Sendeoptik besteht aus einer asphärischen Linse 10 und einer dieser nachgeordneten Zylinderlinse 11. Mittels der asphärischen Linse 10 wird ein kollimiertes Bündel von Sendelichtstrahlen 2 erzeugt. Mittels der Zylinderlinse 11 werden die Sendelichtstrahlen 2 auf den Empfänger 4 fokussiert. Prinzipiell kann die Sendeoptik auch derart ausgebildet sein, dass die Sendelichtstrahlen 2 als kollimiertes Strahlenbündel zum Empfänger 4 geführt werden.

Der Sendeoptik ist ein Umlenkspiegel 12 nachgeordnet. Die Sendelichtstrahlen 2 werden an dem Umlenkspiegel 12 abgelenkt und über ein Austrittsfenster 13 in der Gehäusewand des ersten Gehäuseelements 7 in den Überwachungsbereich geführt.

Der Empfänger 4 ist in Form eines Zeilenelements ausgebildet, welches aus einer linearen Anordnung von Empfangselementen 14 besteht. Das Zeilenelement ist von einem CCD-Zeilenelement oder einem CMOS-Zeilenelement gebildet. Die Empfangselemente 14 sind identisch ausgebildet und weisen insbesondere quadratische oder rechteckige Querschnitte mit Kantenlängen im Bereich einiger µm auf.

Durch die Verwendung von CCD-Zeilenelementen beziehungsweise CMOS-Zeilenelementen lässt sich ein hoher Dynamikbereich realisieren. Der Dynamikbereich ist durch das Verhältnis unterschiedlicher Kontraste von Objekten 5 definiert, welches mit dem Sensor 1 noch auflösbar ist.

Bei Verwendung von CCD-Zeilenelementen als Empfänger 4 können Objekte 5 erfasst werden, bei deren Detektion maximale und minimale Empfangssignalamplituden Eₘᵢₙ und Eₘₐₓ registriert werden, deren Verhältnis bis Eₘₐₓ/Eₘᵢₙ = 10³ beträgt. Diese Dynamik kann auf Werte bis zu 10⁶ gesteigert werden, in dem die Integrationszeit, das heißt die Messzeit des Sensors 1 entsprechend gesteigert wird. Durch eine entsprechende Steigerung der Sendeleistung des Senders 3 lässt sich die Dynamik des Sensors 1 auf Werte bis zu 10⁷ steigern.

Ein weiterer Vorteil des CCD-Zeilenelements besteht darin, dass dieses über den gesamten Amplitudenbereich ein im Wesentlichen lineares Messsignal liefert.

Durch Verwendung eines CMOS-Zeilenelements als Empfänger 4 lässt sich ein Dynamikbereich von 10⁷ ohne Anpassung der Integrationszeit realisieren. Nachteilig bei der Verwendung eines CMOS-Zeilenelements ist, dass dieses im Gegensatz zu einem CCD-Zeilenelement keine lineare sondern eine logarithmische Kennlinie aufweist.

Durch die hohe Dynamik der Zeilenelemente und die regelbare Sendeleistung des Senders 3 wird eine im Vergleich zu bekannten Sensoren 1 wie zum Beispiel Kamerasystemen besonders hohe Nachweisempfindlichkeit erhalten.

Dem Empfänger 4 ist eine Blende 15 vorgeordnet, deren Abmessungen an die Abmessungen des Zeilenelements angepasst sind. Die Blende 15 besteht aus einem Spalt in der Gehäusewand des zweiten Gehäuseelements 8 und ist mit einem Eintrittsfenster 16 verschlossen.

Das Eintrittsfenster 16 und das Austrittsfenster 13 begrenzen den Überwachungsbereich. Dabei sind das Austrittsfenster 13 und das Eintrittsfenster 16 gegenüberliegend angeordnet, wobei das Eintrittsfenster 16 in einer parallel zur Ebene des Eintrittsfensters 16 verlaufenden Ebene liegt.

Zwischen der Blende 15 und dem Empfänger 4 liegt ein optisches Filter 17, dessen Fläche an die Flächen des Empfängers 4 und der Blende 15 angepasst ist. Das Filter 17 ist als Tageslichtfilter oder Interferenzfilter ausgebildet.

Mittels der Sendeoptik werden die Sendelichtstrahlen 2 auf die Oberfläche des Empfängers 4 fokussiert, so dass die Sendelichtstrahlen 2 die Empfangselemente 14 des Empfängers 4 bei freiem Strahlengang vollständig und homogen ausleuchten.

Die Längen des Austrittsfensters 13 und des Eintrittsfensters 16 entsprechen dabei der Länge des Empfängers 4. Der Strahldurchmesser der Sendelichtstrahlen 2 in Längsrichtung ist konstant. Dagegen nimmt der Strahldurchmesser der Sendelichtstrahlen 2 quer zur Längsrichtung des Empfängers 4 bei Durchlaufen des Überwachungsbereichs vom Austrittsfenster 13 bis zum Eintrittsfenster 16 durch die Fokussierungswirkung der Sendeoptik kontinuierlich ab. Dies ist insbesondere aus Figur 2 ersichtlich. Die Breiten des Austrittsfensters 13 und der Blende 15 mit dem Eintrittsfenster 16 sind dabei an die jeweilige lokale Strahlbreite der Sendelichtstrahlen 2 angepasst.

Mittels des erfindungsgemäßen Sensors 1 sind insbesondere die Strukturen von Objekten 5 erfassbar. Hierzu werden in der Auswerteeinheit 9 die Grauwertverteilungen der Empfangssignale der einzelnen Empfangselemente 14 ortsaufgelöst ausgewertet. Die Auswerteeinheit 9 bildet somit die Mittel zur Erfassung von Strukturen von Objekten 5.

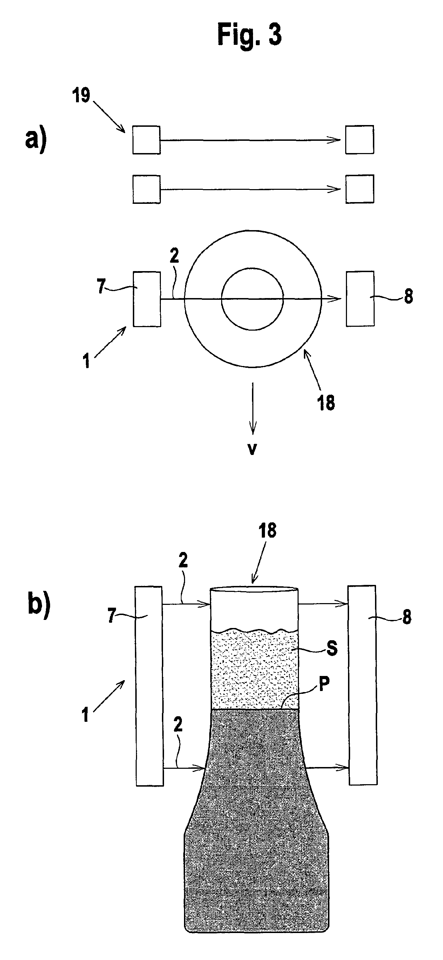

Ein erstes Ausführungsbeispiel zur Kontur- und Kantenerkennung ist in den Figuren 3a und 3b dargestellt. In diesem Fall wird der optische Sensor 1 zur Füllstandskontrolle von Flaschen 18 eingesetzt. Die Flaschen 18 werden dabei derart relativ zum Sensor 1 bewegt, dass die Flaschenhälse der Flaschen 18 zwischen den Gehäuseelementen 7 und 8 des Sensors 1 nacheinander hindurch geführt werden. Die Längsachsen der Gehäuseelemente 7, 8, die im vorliegenden Ausführungsbeispiel separate Einheiten bilden, sind dabei parallel zu den Längsachsen der Flaschen 18 orientiert. Anstelle eines Sensors 1 mit separaten Gehäuseelementen 7, 8 kann auch ein als Gabellichtschranke ausgebildeter Sensor 1 verwendet werden.

Die Flaschen 18 werden auf einem Förderband oder dergleichen in einer Transportrichtung v gefördert. Der Sensor 1 ist vorzugsweise nicht dauernd aktiviert, sondern nur dann, wenn sich eine Flasche 18 wie in Figur 3 dargestellt zwischen den Gehäuseelementen 7, 8 des Sensors 1 befindet und die Sendelichtstrahlen 2 auf das Zentrum der jeweiligen Flasche 18 ausgerichtet sind.

Zur Triggerung des Sensors 1 ist diesem in Transportrichtung v der Flaschen 18 eine Lichtschrankenanordnung 19 mit zwei Lichtschranken vorgeordnet, welche die auf dem Förderband geförderten Flaschen 18 nacheinander erfasst. Die Lichtschrankenanordnung 19 generiert in Abhängigkeit der Erfassung der Flaschen 18 ein Triggersignal, mittels dessen der Sensor 1 nur dann aktiviert wird, wenn die jeweiligen Flaschen 18 zentral von den Sendelichtstrahlen 2 des Sensors 1 erfasst werden.

Damit wird der im Pulsbetrieb betriebene Sender 3 des Sensors 1 jeweils nur kurzzeitig zur Erfassung der Flaschen 18 aktiviert, wodurch die Fremdlichtempfindlichkeit des Sensors 1 beträchtlich vermindert wird.

Mit den Sendelichtstrahlen 2 wird der gesamte Füllhöhenbereich erfasst, innerhalb dessen der Pegel P der Flüssigkeit in der Flasche 18 schwanken kann. Die einen leeren Flaschenbereich durchsetzenden Sendelichtstrahlen 2 werden weniger geschwächt als die einen mit Flüssigkeit befüllten Flaschenbereich durchsetzenden Sendelichtstrahlen 2. Dementsprechend wird am Empfänger 4 ein stufenförmiger Verlauf der Empfangssignale des Empfängers 4 erhalten, wobei die Lage des Empfangselements 14, an welcher der Übergang von einem niedrigen zu einem hohen Signalwert erfolgt, die Lage des Pegels angibt.

Obwohl dieser Übergang im Allgemeinen nicht abrupt erfolgt, kann durch die erfindungsgemäße Grauwertanalyse der Empfangssignale die Lage des Pegels zuverlässig bestimmt werden. Dies gilt insbesondere auch für den Fall, dass sich auf der Oberfläche der Flüssigkeit eine Schaumschicht S befindet. Durch diese Schaumschicht S wird anstelle einer abrupten Signaländerung der Amplituden der Empfangssignale eine kontinuierliche Veränderung der Grauwerte der Empfangssignale im Bereich des Pegels P erhalten.

Die Flaschen 18 sind im Strahlengang der Sendelichtstrahlen 2 vorzugsweise derart angeordnet, dass die Strahlbreite der Sendelichtstrahlen 2 auf der Flaschenoberfläche größer ist als die Durchmesser dort vorhandener Inhomogenitäten, wie zum Beispiel Nahtstellen. Dadurch erfolgt eine optische Integration, das heißt durch die große Strahlbreite werden die Inhomogenitäten auf der Flaschenoberfläche ausintegriert, so dass diese nicht zu einer Verfälschung der Empfangssignale führen.

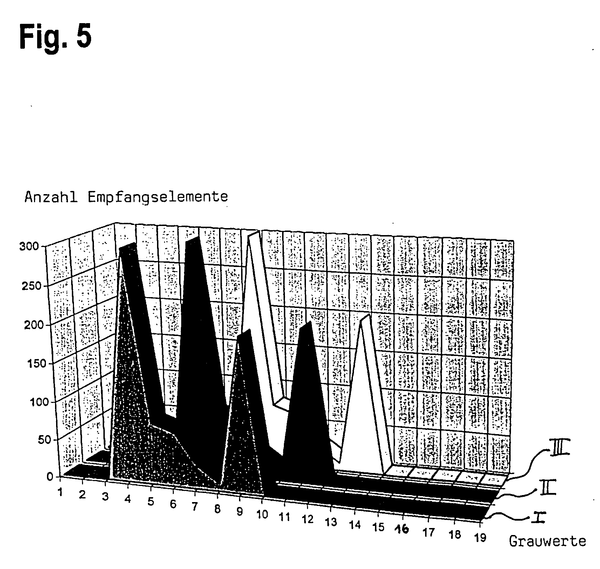

Die Figuren 5 - 8 zeigen Ausführungsbeispiele zur Strukturerkennung an mehrlagigen Objekten 5. Auch bei diesen Ausführungsbeispielen wird der Sender 3 des Sensors 1 zur Fremdlichtunterdrückung nur in vorgegebenen Zeitintervallen aktiviert.

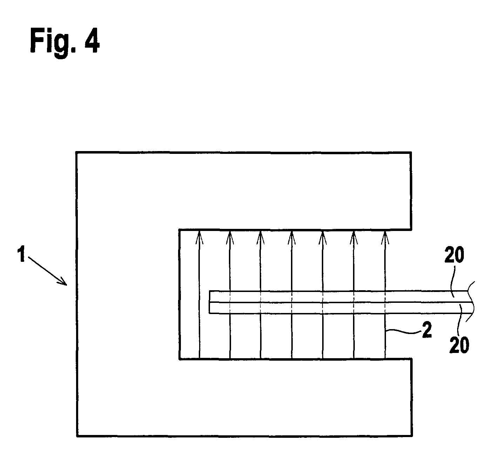

Figur 4 zeigt eine Anordnung des erfindungsgemäßen Sensors 1 zur Erfassung von Bögen 20 in einer bogenverarbeitenden Maschine, insbesondere einer Druckmaschine. Mit dem Sensor 1 wird erfasst, ob in der bogenverarbeitenden Maschine ein Einfach- oder Doppelbogen gefördert wird. Im fehlerfreien Fall wird ein Einfachbogen gefördert. Figur 4 zeigt eine Detektion eines Doppelbogens.

Die Ebenen der zu erfassenden Bögen 20 liegen parallel zur Oberfläche des Empfängers 4 im Überwachungsbereich. Dabei sind die Strahlachsen der Sendelichtstrahlen 2 senkrecht zu den Oberflächen der Bögen 20 orientiert.

Ist im Strahlengang des Sensors 1 nur ein Einfachbogen angeordnet, so wird eine geringere Abschwächung der Sendelichtstrahlen 2 erhalten, als dies bei einem Doppel- oder sogar einem Dreifachbogen der Fall wäre.

Für den Fall, dass die Bögen 20 eine homogene Struktur aufweisen und zudem einfarbig ausgebildet sind, wird sowohl für einen Einfachbogen als auch für einen Mehrfachbogen an jedem Empfangselement 14 als Amplitudenwert derselbe Grauwert erhalten. Sind die Bögen 20 jedoch bedruckt, so werden die Sendelichtstrahlen 2 an bedruckten Stellen der Bögen 20 stärker abgeschwächt als an unbedruckten Stellen.

Würden die Bögen 20 punktuell mit einer Lichtschranke abgetastet werden, wäre aufgrund dieser Bedruckungen eine sichere Unterscheidung von Bögen 20 nicht möglich.

Mit dem erfindungsgemäßen Sensor 1 werden jedoch ortsaufgelöst die Grauwerte an den Ausgängen der einzelnen Empfangssignale analysiert, so dass auch für bedruckte Bögen 20 eine sichere Unterscheidung von Doppel- und Einfachbögen möglich ist.

Dies ist in Figur 5 veranschaulicht. Dort ist die Anzahl der Empfangselemente 14, die einen bestimmten Grauwert annehmen, in Abhängigkeit der verschiedenen Grauwerte dargestellt. Dabei entspricht der Grauwert 1 einem freien Strahlengang. Je größer der Grauwert ist, desto größer ist die Abschwächung der Sendelichtstrahlen 2 der Bögen 20 und desto kleiner der Amplitudenwert des entsprechenden Empfangssignals.

Die mit I gekennzeichnete Kurve gibt die Grauwertverteilung eines Einfachbogens an. Die mit II gekennzeichnete Kurve gibt die Grauwertverteilung eines Doppelbogens an, der aus zwei mit dem Einfachbogen identischen, übereinander liegenden Bögen 20 besteht. Die mit III gekennzeichnete Kurve gibt die Grauwertverteilung eines entsprechenden Dreifachbogens an.

Wie aus Figur 5 ersichtlich weist aufgrund der Bogenbedruckung die Grauwertverteilung I für den Einfachbogen zwei Signalpeaks auf. Da der Doppelbogen dieselbe Bedruckungsstruktur aufweist, weist die entsprechende Grauwertverteilung dieselben Signalpeaks auf. Da die Dicke des Doppelbogens jedoch größer ist als die Dicke des Einfachbogens, sind die Lagen des Signalpeaks im Vergleich zur Grauwertverteilung I zu größeren Grauwerten verschoben. Entsprechend weist die Grauwertverteilung III für die Detektion von Dreifachbögen wiederum die beiden Signalpeaks auf, wobei diese im Vergleich zur Grauwertverteilung II zu noch höheren Grauwerten verschoben sind. Durch die Auswertung der Lage der Signalpeaks kann somit mit großer Sicherheit eine Unterscheidung von Einfach- und Mehrfachbögen vorgenommen werden.

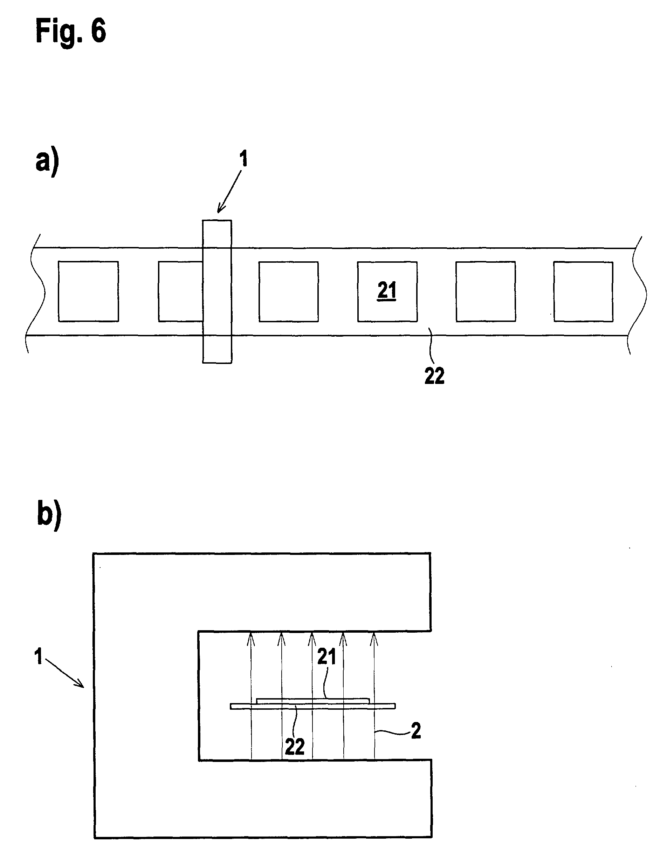

Die Figuren 6a und 6b zeigen eine Anordnung des erfindungsgemäßen Sensors 1 zur Erfassung von Etiketten 21, die auf Trägermaterialien 22 aufgebracht sind. Die Etiketten 21 mit dem Trägermaterial 22 werden durch den Überwachungsbereich des Sensors 1 bewegt, wobei die Sensoranordnung im Wesentlichen der Anordnung gemäß Figur 4 entspricht. Die Etiketten 21 und das Trägermaterial 22 sind transparent. Die maximale Abschwächung der Sendelichtstrahlen 2 wird bei Durchgang durch die Etikettenkanten erhalten.

Zur Erzielung einer möglichst hohen Nachweisempfindlichkeit sind daher die Strahlbreiten der Sendelichtstrahlen 2 an die Breiten der Kanten angepasst.

Mittels des Sensors 1 ist die komplette Randkontur einer Etikette 21 sowie deren räumliche Orientierung erfassbar. Damit können mit Hilfe des Sensors 1 Etiketten 21 positionsgenau erfasst werden, was eine wichtige Voraussetzung für das präzise Aufbringen der Etiketten 21 auf einem Zielträger ist.

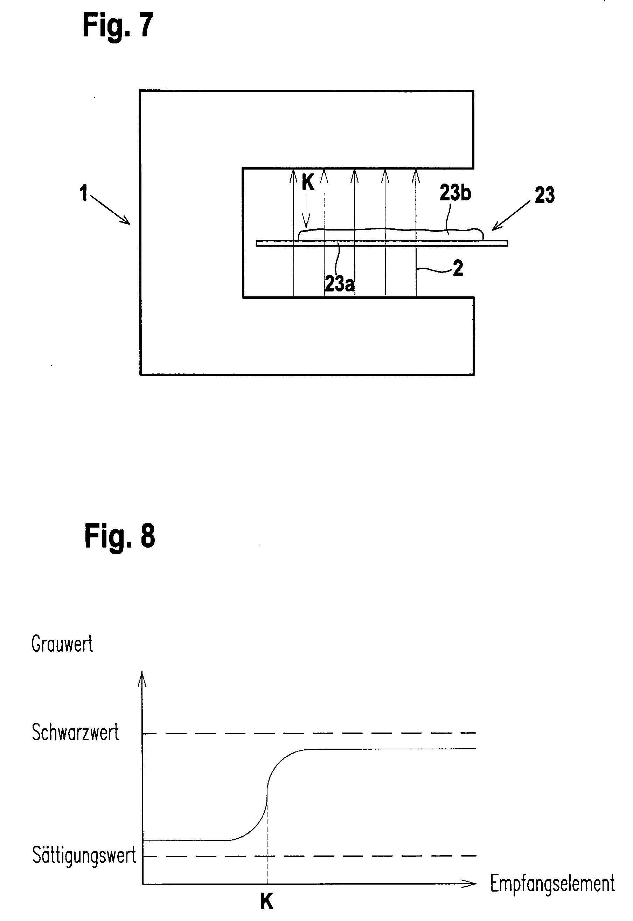

Figur 7 zeigt eine Anordnung eines Sensors 1 zur Strukturerkennung von Damenbinden 23. Die Damenbinden 23 bestehen jeweils aus einem Trägermaterial 23a und einer Einlage 23b. Die Damenbinde 23 ist derart in den Überwachungsbereich eingebracht, dass diese wie in Figur 7 dargestellt von den Sendelichtstrahlen 2 durchstrahlt wird. Anhand der Analyse der dabei an den Ausgängen der Empfangselemente 14 erhaltenen Grauwerte erfolgt eine Bestimmung des Konturverlaufs der Einlage 23b auf dem Trägermaterial 23a.

Die bei der Anordnung gemäß Figur 7 erhaltenen Grauwerte für die einzelnen Empfangselemente 14 des Empfängers 4 sind in Figur 8 dargestellt.

Die das Trägermaterial 23a durchsetzenden Sendelichtstrahlen 2 werden nur schwach abgeschwächt, so dass die Amplituden der entsprechenden Empfangssignale groß sind und deren Grauwerte entsprechend gering sind. Die entsprechenden Grauwerte in Figur 7 liegen dabei dicht an einem als Sättigungswert bezeichneten Grenzwert.

Die das Trägermaterial 23a und die Einlage 23b durchsetzenden Sendelichtstrahlen 2 werden erheblich stärker abgeschwächt, so dass die Grauwerte der entsprechenden Empfangssignale entsprechend hoch sind und näherungsweise einem als Schwarzwert bezeichneten zweiten Grenzwert entsprechen. Die auf den Grenzbereich der Einlage 23b treffenden Sendelichtstrahlen 2 generieren an den zugeordneten Empfangselementen 14 Grauwerte, die zwischen den beiden Grenzwerten liegen. Da in diesem Grenzbereich die Dicke der Einlage 23b kontinuierlich bis auf ihren Maximalwert zunimmt, wird gemäß Figur 7 auch ein kontinuierlicher Übergang der Grauwerte vom Sättigungswert auf den Schwarzwert erhalten. Die Lage der Kante K der Einlage 23b wird durch die Bestimmung des Wendepunkts des Kurvenverlaufs der Grauwerte (Figur 8) ermittelt.

Zur vollständigen Ermittlung der Kontur der Einlage 23b wird die Damenbinde 23 durch den Strahlengang der Sendelichtstrahlen 2 des Sensors 1 bewegt und dabei kontinuierlich abgetastet.

Zudem können mit dem Sensor 1 auch Strukturdefekte in der Damenbinde, wie zum Beispiel Löcher erfasst werden. Derartige Defekte führen zu Abweichungen gegenüber dem in Figur 8 dargestellten idealen Kurvenverlauf der Grauwerte.

### Bezugszeichenliste

- (1): Optischer Sensor
- (2): Sendelichtstrahlen
- (3): Sender
- (4): Empfänger
- (5): Objekt
- (6): Gehäuse
- (7): Gehäuseelement
- (8): Gehäuseelement
- (9): Auswerteeinheit
- (10): Asphärische Linse
- (11): Zylinderlinse
- (12): Umlenkspiegel
- (13): Austrittsfenster
- (14): Empfangselement
- (15): Blende
- (16): Eintrittsfenster
- (17): Optisches Filter
- (18): Flaschen
- (19): Lichtschrankenanordnung
- (20): Bogen
- (21): Etikett
- (22): Trägermaterial
- (23): Damenbinde
- (23a): Trägermaterial
- (23b): Einlage
- Eₘᵢₙ: Empfangssignalamplitude
- Eₘₐₓ: Empfangssignalamplitude
- K: Kante
- S: Schaumschicht
- P: Pegel
- v: Transportrichtung

## Patentansprüche

1. Optischer Sensor mit wenigstens einem Sender und einem in Abstand zu diesem angeordneten Empfänger, wobei die vom Sender emittierten Sendelichtstrahlen bei freiem Strahlengang auf den Empfänger geführt sind und bei einem Objekteingriff zumindest teilweise abgeschwächt sind, **dadurch gekennzeichnet, dass** der Empfänger (4) von einem eine vorgegebene Anzahl von Empfangselementen (14) aufweisenden Zeilenelement gebildet ist, und dass Mittel zur Erkennung von Strukturen von im Strahlengang der Sendelichtstrahlen (2) angeordneten Objekten (5) vorgesehen sind.

2. Optischer Sensor nach Anspruch 1, **dadurch gekennzeichnet, dass** die Mittel zur Erkennung von Strukturen von Objekten (5) von einer Auswerteeinheit (9) gebildet sind, in welcher eine ortsaufgelöste Grauwertanalyse der an den Ausgängen der Empfangselemente (14) des Empfängers (4) anstehenden Empfangssignale durchgeführt wird.

3. Optischer Sensor nach Anspruch 2, **dadurch gekennzeichnet, dass** mittels der Auswerteeinheit (9) der Sender (3) angesteuert ist.

4. Optischer Sensor nach einem der Ansprüche 1 - 3, **dadurch gekennzeichnet, dass** das Zeilenelement als CCD-Zeilenelement oder als CMOS-Zeilenelement ausgebildet ist, und dass der Sender (3) von einer Punktlichtdiode gebildet ist.

5. Optischer Sensor nach einem der Ansprüche 1 - 4, **dadurch gekennzeichnet, dass** die Sendelichtstrahlen (2) auf die Empfangselemente (14) fokussiert sind, so dass die Sendelichtstrahlen (2) den Empfänger (4) bei freiem Strahlengang vollständig ausleuchten.

6. Optischer Sensor nach einem der Ansprüche 1 - 5, **dadurch gekennzeichnet, dass** der Sender (3) in einem ersten Gehäuseelement (7) angeordnet ist, und dass der Empfänger (4) in einem zweiten Gehäuseelement (8) integriert ist.

7. Optischer Sensor nach Anspruch 6, **dadurch gekennzeichnet, dass** dieser als Gabellichtschranke ausgebildet ist, wobei die Gehäuseelemente (7, 8) Bestandteil eines gabelförmigen Gehäuses (6) sind.

8. Optischer Sensor nach einem der Ansprüche 1 - 7, **dadurch gekennzeichnet, dass** dem Sender (3) zur Strahlformung der Sendelichtstrahlen (2) eine Sendeoptik nachgeordnet ist.

9. Optischer Sensor nach Anspruch 8, **dadurch gekennzeichnet, dass** die Sendeoptik aus einer asphärischen Linse (10) zur Kollimierung der Sendelichtstrahlen (2) und aus einer Zylinderlinse (11) zur Fokussierung der Sendelichtstrahlen (2) besteht.

10. Optischer Sensor nach einem der Ansprüche 8 oder 9, **dadurch gekennzeichnet, dass** die fokussierten Sendelichtstrahlen (2) durch ein Austrittsfenster (13) in der Gehäusewand des ersten Gehäuseelements (7) geführt sind.

11. Optischer Sensor nach einem der Ansprüche 1 - 10, **dadurch gekennzeichnet, dass** dem Empfänger (4) eine Blende (15) vorgeordnet ist, dessen Länge an die Länge des Zeilenelements angepasst ist und dessen Breite an die Strahlbreite der Sendelichtstrahlen (2) angepasst ist.

12. Optischer Sensor nach Anspruch 11, **dadurch gekennzeichnet, dass** die Blende (15) von einem Spalt in der Gehäusewand des zweiten Gehäuseelements (8) gebildet ist.

13. Optischer Sensor nach Anspruch 12, **dadurch gekennzeichnet, dass** der Spalt in der Gehäusewand mittels eines Eintrittsfensters (16) verschlossen ist.

14. Optischer Sensor nach Anspruch 13, **dadurch gekennzeichnet, dass** das Eintrittsfenster (16) in einer parallel zur Ebene des Austrittsfensters (13) liegenden Ebene orientiert ist, wobei das Eintrittsfenster (16) dem Austrittsfenster (13) in Abstand gegenüberliegt.

15. Optischer Sensor nach einem der Ansprüche 11 - 14, **dadurch gekennzeichnet, dass** zwischen der Blende (15) und dem Empfänger (4) wenigstens ein optisches Filter (17) angeordnet ist.

16. Optischer Sensor nach Anspruch 14, **dadurch gekennzeichnet, dass** das optische Filter (17) von einem Tageslichtfilter oder einem Interferenzfilter gebildet ist.

17. Optischer Sensor nach einem der Ansprüche 1 - 16, **dadurch gekennzeichnet, dass** dieser an einer bogenverarbeitenden Maschine zur Unterscheidung von Einfach- und Mehrfachbögen angeordnet ist.

18. Optischer Sensor nach einem der Ansprüche 1 - 17, **dadurch gekennzeichnet, dass** dieser zur Füllstandskontrolle von Behältern, insbesondere Flaschen (18) eingesetzt wird.

19. Optischer Sensor nach einem der Ansprüche 1 - 18, **dadurch gekennzeichnet, dass** dieser zur Erfassung von Strukturen mehrlagiger Objekte (5) eingesetzt wird.

20. Optischer Sensor nach Anspruch 19, **dadurch gekennzeichnet, dass** dieser zur Erfassung von Strukturdefekten in mehrlagigen Objekten (5) eingesetzt wird.

21. Optischer Sensor nach einem der Ansprüche 19 oder 20, **dadurch gekennzeichnet, dass** die mehrlagigen Objekte (5) von einem Trägermaterial (22) und darauf aufgebrachten Etiketten (21) gebildet sind.

22. Optischer Sensor nach Anspruch 21, **dadurch gekennzeichnet, dass** die Etiketten (21) und/oder das Trägermaterial (22) aus zumindest teilweise transparenten Materialien bestehen.

23. Optischer Sensor nach Anspruch 22, **dadurch gekennzeichnet, dass** in dessen Auswerteeinheit (9) aus den Empfangssignalen der Empfangselemente (14) der Verlauf einer Kontur einer Etikette (21) bestimmt wird.

24. Optischer Sensor nach einem der Ansprüche 19 oder 20, **dadurch gekennzeichnet, dass** die mehrlagigen Objekte (5) von Damenbinden (23), bestehend aus einem Trägermaterial (23a) und einer Einlage (23b), gebildet sind.

25. Optischer Sensor nach Anspruch 24, **dadurch gekennzeichnet, dass** in dessen Auswerteeinheit (9) aus den Empfangssignalen der Empfangselemente (14) der Konturverlauf der Einlage (23b) auf dem Trägermaterial (23a) ermittelt wird.
